# EUROPÄISCHE PATENTSCHRIFT

(11) **EP 3 552 062 B1**
(45) Veröffentlichungstag und Bekanntmachung des Hinweises auf die Patenterteilung: **08.04.2020**
(21) Anmeldenummer: 18700735.6
(22) Anmeldetag: 15.01.2018
(51) Int. Cl.: G08G 1/0967, G05B 15/02, B60W 50/00, G05B 19/042, G08G 1/0968

(54) **VERFAHREN ZUM BEREITSTELLEN VON SENSORBASIERTEN FAHRZEUGFUNKTIONEN IN EINEM KRAFTFAHRZEUG SOWIE KRAFTFAHRZEUG-RECHENEINRICHTUNG UND KRAFTFAHRZEUG**
METHOD FOR PROVIDING SENSOR-BASED VEHICLE FUNCTIONS IN A MOTOR VEHICLE, AND MOTOR VEHICLE COMPUTING DEVICE AND MOTOR VEHICLE
PROCÉDÉ POUR FOURNIR DES FONCTIONS DE VÉHICULE FAISANT APPEL À DES CAPTEURS DANS UN VÉHICULE À MOTEUR ET DISPOSITIF DE CALCUL POUR VÉHICULE À MOTEUR ET VÉHICULE À MOTEUR

(30) Priorität: 17.01.2017 DE 102017200654
(43) Veröffentlichungstag der Anmeldung: 16.10.2019
(73) Patentinhaber: Audi AG, 85045 Ingolstadt (DE)
(72) Erfinder: KISTLER, Günter, 85283 Niederlauterbach (DE)
(86) Internationale Anmeldenummer: PCT/EP2018/050841
(87) Internationale Veröffentlichungsnummer: WO 2018/134149

(56) Entgegenhaltungen:
- DE-A1- 19 909 157
- US-A1- 2014 129 047
- US-A1- 2014 277 838
- US-A1- 2017 011 561

## Beschreibung

Die Erfindung betrifft ein Verfahren zum Bereitstellen von Fahrzeugfunktionen in einem Kraftfahrzeug. Die Fahrzeugfunktionen sind jeweils sensorbasiert, d.h. sie werden in Abhängigkeit von Sensordaten einer Sensoreinrichtung des Kraftfahrzeugs ausgeführt. Es gibt in dem Kraftfahrzeug also eine Sensorebene und eine übergeordnete Rechenebene, auf welcher eine Recheneinrichtung mehrere Fahrzeugfunktionen ausführt. Zu der Erfindung gehört auch die Recheneinrichtung zum Ausführen der Fahrzeugfunktionen. Schließlich umfasst die Erfindung auch das Kraftfahrzeug mit einer Sensoreinrichtung und mit einer Recheneinrichtung.

Bei einem heutigen Steuergerät ist es in der Regel vorgesehen, dass es für eine bestimmte Fahrzeugfunktion konstruiert ist und hierzu auch direkt mit den Sensoren verschaltet ist, die für die Fahrzeugfunktion benötigt werden. Die Software oder Funktionskomponente, mittels welcher die Fahrzeugfunktion bereitgestellt wird, wird im Produktionsprozess des Steuergeräts in einen Datenspeicher desselben abgespeichert und ist auf die vorhandene, angeschlossene Sensorik abgestimmt. Eine Funktionserweiterung oder Funktionsänderung während der Laufzeit des Steuergeräts, also nach dem Einbau in ein Kraftfahrzeug, ist nicht vorgesehen oder erfordert einen Umbau oder Service.

Somit sind Fahrzeugfunktionen an ein jeweiliges Steuergerät gebunden und müssen an die Bauweise der Sensoren angepasst werden. Eine Veränderung einer Fahrzeugfunktion ist nur durch einen Komplettaustausch der Software des Steuergeräts ermöglicht. Ein Nachladen von einzelnen Fahrzeugfunktionen ist für ein Steuergerät nicht vorgesehen. Ein Kraftfahrzeug mit mehreren Fahrzeugfunktionen weist entsprechend auch mehrere Steuergeräte auf, sodass eine Vielzahl von Steuergeräten in dem Kraftfahrzeug vorhanden ist, von denen jedes spezialisiert ausgestaltet ist.

Aus der DE 10 2004 049 155 B3 ist ein Diagnosesystem für ein Kraftfahrzeug bekannt, bei welchem mehrere Software-Komponenten, die Daten untereinander austauschen müssen, auf einem gemeinsamen Steuergerät installiert sind. Somit werden Kommunikationswege verkürzt.

Aus der DE 10 2012 107 886 A1 ist ein Verfahren zur elektronischen Erkennung von Verkehrszeichen bekannt, bei welchem eine Objekterkennungseinheit direkt mit einer Kamera verbunden ist, um Bilddaten der Kamera empfangen zu können.

Aus der DE 10 2015 118 489 A1 ist eine Fernbedienung eines autonomen Fahrzeugs bekannt. In dem Fahrzeug kann ein Laptop oder allgemein eine Computervorrichtung an Sensoren des Kraftfahrzeugs und an Fahrzeugsysteme des Kraftfahrzeugs, wie beispielsweise ein Antriebssystem, angeschlossen werden. Die Computervorrichtung kann über eine Kommunikationsschnittstelle auch mit dem Internet verbunden werden.

Aus der DE 100 52 570 A1 ist zum Steuern von Betriebsabläufen in einem Kraftfahrzeug ein System bekannt, das mehrere Softwaremodule umfasst, die in einen hardwareabhängigen und einen hardwareunabhängigen Anteil aufgeteilt sind. Um diese Anteile zu koppeln, tauschen sie über Schnittstellen Daten nicht in einem hardwarespezifischen Format, sondern als physikalische Werte aus, wie zum Beispiel die Temperatur in Kelvin.

Aus der DE 199 09 157 A1 ist ein verteiltes Fahrzeuginformationsbearbeitungssystem bekannt, das einen Systemteil im Kraftfahrzeug und einen Systemteil außerhalb des Kraftfahrzeugs auf einem Server aufweisen kann. Einzelne Komponenten des Systems sind über Dienste-Schnittstellen miteinander verknüpft.

Aus der DE 103 08 460 A1 ist ein System zum Ansteuern einer Brennkraftmaschine bekannt. Bei dem System ist eine Abstraktion von Sensor/Aktor-Steuervorgängen einerseits und softwarebasierten Steuervorgängen andererseits mittels eines Kapselungsmoduls vorgesehen.

Die US 2014/129047 A1 beschreibt ein System zur cloud-basierten Überwachung eines Kraftfahrzeugs, wobei für die Übertragung von Fahrzeugdaten eine Umwandlung von fahrzeugspezifischen Datenformaten in ein universelles Datenformat vorgesehen sein kann.

Der Erfindung liegt die Aufgabe zugrunde, in einem Kraftfahrzeug Fahrzeugfunktionen flexibel bereitstellen zu können.

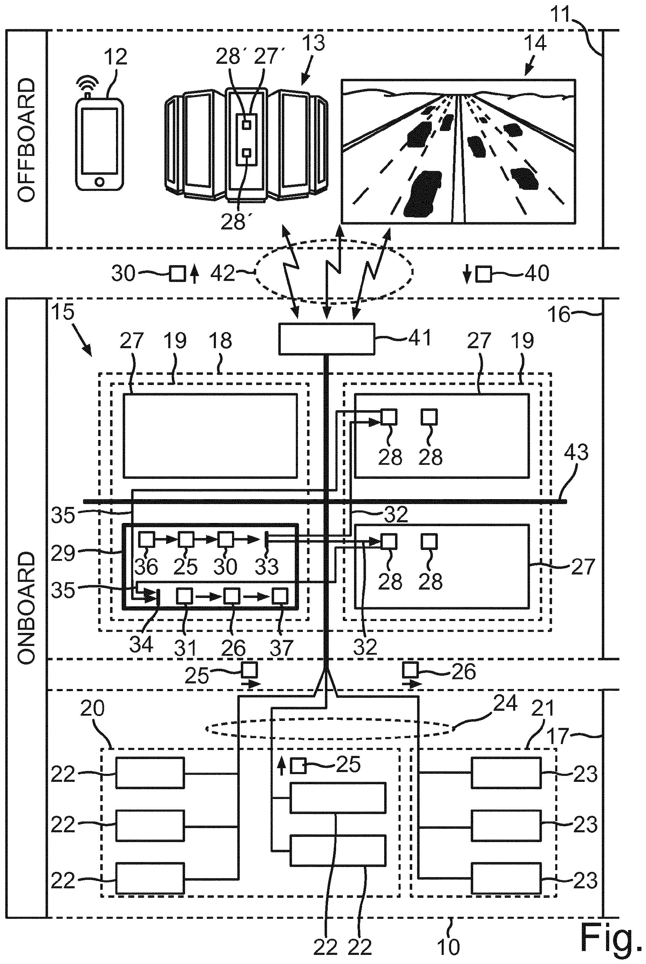

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Mittels des erfindungsgemäßen Verfahrens können Fahrzeugfunktionen in einem Kraftfahrzeug bereitgestellt werden. Ein jeweiliges Beispiel für solche Fahrzeugfunktionen sind eine Einparkassistenz, autonomes Fahren, ein Klimamanagement, eine Fahrerassistenzfunktion, ein Abstandsregelautomat, eine Überholassistenz. Das Kraftfahrzeug kann man sich in eine Sensorebene und eine logische Rechenebene eingeteilt denken. Zum Realisieren der Rechenebene sieht das erfindungsgemäße Verfahren vor, dass eine Recheneinrichtung des Kraftfahrzeugs mehrere Fahrzeugfunktionen ausführt oder bereitstellt. Diese Fahrzeugfunktionen basieren auf Sensordaten einer Sensoreinrichtung, die wiederum insgesamt die logische Sensorebene repräsentiert. Mit anderen Worten werden die Fahrzeugfunktionen auf der Grundlage von Sensordaten der Sensoreinrichtung des Kraftfahrzeugs ausgeführt. Als Sensoreinheit kann beispielsweise jeweils eine der folgenden vorgesehen sein: ein Temperatursensor, ein Drehzahlsensor, ein Stromsensor für elektrischen Strom, ein Füllstandssensor, eine Kamera, um nur einige Beispiele zu nennen. Die Recheneinrichtung kann zum Ausführen der Fahrzeugfunktionen einen oder mehrere Mikroprozessoren und/oder Mikrocontroller aufweisen. Die Recheneinrichtung kann durch ein einzelnes Steuergerät oder durch einen Verbund aus mehreren Steuergeräten realisiert sein. Die Fahrzeugfunktionen können jeweils beispielsweise durch ein Programmmodul oder Programmcode realisiert sein.

Um nun die beiden Ebenen (Rechenebene und Sensorebene) logisch voneinander zu trennen oder unabhängig zu machen, ist erfindungsgemäß folgendes vorgesehen. In dem Kraftfahrzeug sind die Fahrzeugfunktionen mit der Sensoreinrichtung über eine Integrationskomponente gekoppelt. Diese Integrationskomponente kann ebenfalls Teil der Recheneinrichtung sein, also beispielsweise ebenfalls ein Programmmodul oder Programmcode. Die Integrationskomponente vermittelt zwischen den Fahrzeugfunktionen einerseits und zumindest einer Sensoreinheit der Sensoreinrichtung andererseits. Sie ist also eine Vermittlungskomponente und integriert die Sensorik in die Rechenebene. Die Integrationskomponente beschafft hierzu die besagten Sensordaten aus einer Sensoreinheit oder aus mehreren Sensoreinheiten der Sensoreinrichtung unabhängig von den Fahrzeugfunktionen. Mit anderen Worten ist es aus Sicht der Integrationskomponente zunächst einmal egal, für welche der Fahrzeugfunktionen die Sensordaten beschafft werden. Mit anderen Worten beschafft die Integrationskomponente die Sensordaten ohne eine Aufforderung durch eine der Fahrzeugfunktionen. Die Integrationskomponente beschafft die Sensordaten mittels einer jeweiligen sensorspezifischen Erfassungsroutine. Mit anderen Worten ist die Integrationskomponente an die jeweilige Sensoreinheit angepasst, um die Sensordaten empfangen oder auslesen zu können. Die Integrationskomponente wandelt dann die Sensordaten zu jeweiligen Umgebungsdaten oder allgemein Zustandsdaten um. Hierzu können die Sensordaten zum Beispiel umgerechnet oder kombiniert werden, was im Weiteren noch genauer beschrieben wird. Allgemein erzeugt die Integrationskomponente Zustandsdaten aus den jeweiligen Sensordaten, d.h. die Zustandsdaten können mit den ihnen zugrunde liegenden Sensordaten auch identisch sein oder diese enthalten.

Jede der Fahrzeugfunktionen muss sich somit nicht mit dem Beschaffen der Sensordaten aus der Sensoreinheit oder den Sensoreinheiten der Sensoreinrichtung auskennen oder befassen. Stattdessen ruft jede der Fahrzeugfunktionen jeweils zumindest einige der bereitgestellten Zustandsdaten mittels einer sensor-unabhängigen Abrufroutine aus der Integrationskomponente ab. Die Abrufroutine kann als eine API (Application Specific Interface) der Integrationskomponenten realisiert sein. Jede Fahrzeugfunktion kann also eine Abrufroutine nutzen, die nicht an die Sensoreinheit oder die Sensoreinheiten der Sensoreinrichtung angepasst sein muss. Damit ist die Fahrzeugfunktion hardwareunabhängig. Somit ergibt sich für die Fahrzeugfunktionen ein einheitliches Protokoll. Das Austauschen einer Sensoreinheit erfordert es somit nicht, dass auch die Fahrzeugfunktion angepasst wird.

Jede der Fahrzeugfunktionen muss sich somit nicht mit dem Interpretieren von sensorspezifischen Sensordaten auskennen oder befassen. Stattdessen ruft jede der Fahrzeugfunktionen eine Abrufroutine der Integrationskomponente auf und nimmt die Umgebungsdaten entgegen, die die gemessene Größe in einem Format angeben, das von einem sensorspezifischen (z.B. herstellerbedingten) Format der Sensordaten verschieden sein kann. Die sensorspezifische Erfassungsroutine können dagegen Steuerbefehle und/oder Protokolle enthalten, die nur von dem Sensor interpretiert oder erzeugt werden. Z.B. kann die Erfassungsroutine aus einem Sensor eine sensorspezifische Angabe, z.B. "12 Ticks links" für einen Lenkwinkel, empfangen und daraus sensorunabhängig interpretierbare Umgebungsdaten, z.B. "5° links", erzeugen. Die Umrechnung erfolgt dann in der Integrationskomponente.

Zudem stehen die Zustandsdaten für mehrere Fahrzeugfunktionen bereit, sodass nicht jede Fahrzeugfunktion selbst die von ihr benötigten Sensordaten aus derselben Sensoreinheit beschaffen muss. Bevorzugt ist eine einzige Integrationskomponente vorgesehen, von welcher alle Fahrzeugfunktionen die Zustandsdaten abrufen können.

Durch die Erfindung ergibt sich der Vorteil, dass eine Fahrzeugfunktion einerseits und eine Sensoreinheit andererseits ausgetauscht werden können, ohne dass der jeweils andere Teil eine Anpassung erfordert. Die Integrationskomponente vermittelt zwischen Fahrzeugfunktionen einerseits und der zumindest einen Sensoreinheit der Sensoreinrichtung andererseits. Zudem können die Fahrzeugfunktionen unabhängig von der im Kraftfahrzeug genutzten Sensoreinheiten entwickelt werden und in Kraftfahrzeugen, die unterschiedlichen Sensoreinheiten aufweisen, verwendet werden.

Bisher war von zwei logischen Ebenen die Rede, nämlich der Rechnerebene oder Rechenebene einerseits und der Sensor-Aktuator-Ebene darunter. Es ist noch eine dritte Ebene darüber vorgesehen, nämlich eine fahrzeugexterne Offboard-Ebene. Um diese zu realisieren, ist die Recheneinrichtung mit einer Kommunikationseinrichtung gekoppelt. Die Kommunikationseinrichtung betreibt eine jeweilige Kommunikationsverbindung mit zumindest einem fahrzeugfremden Fremdgerät. Ein solches Fremdgerät kann ein fahrzeugexternes Gerät oder ein in dem Kraftfahrzeug befindliches mobiles Endgerät sein. Ein fahrzeugexternes Fremdgerät kann zum Beispiel ein Server des Internets sein oder ein anderes Kraftfahrzeug. Zum Übertragen der Daten kann beispielsweise in der Kommunikationseinrichtung ein Mobilfunkmodul (z.B. GSM, UMTS, LTE) und/oder ein WLAN-Modul (Wireless Local Area Network) oder ein Kommunikationsmodul für eine Car2X-Kommunikation oder eine Fahrzeug-zu-Fahrzeug-Kommunikation vorgesehen sein. Die Integrationskomponente kann die Sensorebene mit der Offboard-Ebene koppeln. Hierzu kann vorgesehen sein, dass die Integrationskomponente zumindest einige ihrer Zustandsdaten (gebildet aus den Sensordaten) an zumindest eine fahrzeugextern ausgeführte, ausgelagerte Fahrzeugfunktion über die besagte Kommunikationseinrichtung aussendet. Es kann also auch eine Fahrzeugfunktion "offboard" außerhalb des Kraftfahrzeugs durchgeführt werden. Bei einer solchen ausgelagerten Fahrzeugfunktion kann es sich beispielsweise jeweils um eine Navigationsassistenz (Routenführung) oder Spracherkennung handeln.

Die fahrzeugeigenen oder fahrzeuginternen Fahrzeugfunktionen sind mit der Offboard-Ebene gekoppelt. Hierzu empfängt die Integrationskomponente über die Kommunikationseinrichtung Quellendaten wie Sensordaten. Aus den Quellendaten erzeugt die Integrationskomponente weitere Zustandsdaten für die im Kraftfahrzeug betriebenen Fahrzeugfunktionen. Beispielsweise können auf diese Weise Wetterdaten als weitere Zustandsdaten oder auch Medieninhalte (Musikstreaming, Videostreaming) oder Kartendaten bereitgestellt werden. Die Fahrzeugfunktionen können dann mittels zumindest einer Abrufroutine auch diese zusätzlichen Zustandsdaten abrufen, genauso wie Sensordaten abgerufen werden können. Es kann also einer Fahrzeugfunktion egal sein, ob die Zustandsdaten aus der Offboard-Ebene oder aus der Sensorebene stammen. Zusätzlich kann vorgesehen sein, dass auch das Steuern zumindest eines Aktuators der Aktuatorebene von der Offboard-Ebene aus erfolgt. Hierzu können also Kommandodaten von einer ausgelagerten Fahrzeugfunktion über die Kommunikationseinrichtung in das Kraftfahrzeug an die Integrationskomponente übertragen werden, welche daraus dann Steuerdaten für zumindest einen Aktuator der Aktuatoreinrichtung des Kraftfahrzeugs bildet. Es kann schließlich auch vorgesehen sein, dass eine im Kraftfahrzeug ausgeführte Fahrzeugfunktion Kommandodaten erzeugt, auf deren Grundlage dann durch die Integrationskomponente mittels der Kommunikationseinrichtung offboard an eine fahrzeugexterne Aktuatoreinrichtung als aktuatorspezifische Steuerdaten ausgesendet werden.

Erfindungsgemäß stellt die Integrationskomponente die Zustandsdaten an einer Abrufschnittstelle bereit, die für alle durch die Recheneinrichtung ausgeführten Fahrzeugfunktionen zugänglich ist. Die bereitgestellten Zustandsdaten werden dann durch jede Fahrzeugfunktion jeweils mittels der beschriebenen Abrufroutine an dieser Abrufschnittstelle ausgewählt und abgerufen. Indem die Zustandsdaten an der Abrufschnittstelle für alle Fahrzeugfunktionen zugänglich sind, kann also eine Fahrzeugfunktion nachgerüstet werden und diese dann ebenfalls mittels einer Abrufroutine Zustandsdaten auswählen und abrufen. Somit kann eine neue Fahrzeugfunktion im Kraftfahrzeug nachgerüstet werden, ohne dass hierzu eine zusätzliche Sensoreinheit bereitgestellt werden muss.

Das beschriebene indirekte Übertragen der Sensordaten über die Integrationskomponente zu den Fahrzeugfunktionen hin kann zu einer Verzögerung führen oder zu einer Beschränkung der Datenrate. Um dies nicht für Sensoreinheiten, die eine vorgegebenen Mindestdatenrate für das vollständige Ausgeben der Sensordaten benötigen, hinnehmen zu müssen, ist vorgesehen, dass zumindest eine Fahrzeugfunktion über eine Direktverbindung unter Umgehung der Integrationskomponente mit zumindest einer Sensoreinheit der Sensoreinrichtung gekoppelt ist. Beispielsweise kann eine Fahrzeugfunktion auf diese Weise mit einer Videokamera und/oder Infrarotkamera und/oder einem Radar gekoppelt sein. Aus der Sensoreinheit werden deren Sensordaten dann durch die Fahrzeugfunktion mit einer Datenrate empfangen, die größer als eine von der Integrationskomponente bereitgestellte Datenrate ist, wie sie für die Zustandsdaten vorgesehen ist. Somit ist ein direktes Einlesen von Sensordaten für eine Fahrzeugfunktion ermöglicht.

Bisher wurde die Übertragung von Sensordaten aus der Sensorebene in die Rechenebene beschrieben. Andersherum ist es auch ermöglicht, in der Rechenebene aus den Fahrzeugfunktionen heraus zumindest einen Aktor oder Aktuator einer Aktuatoreinrichtung des Kraftfahrzeugs zu steuern. Die besagte Sensorebene kann also auch eine kombinierte Sensor-Aktuator-Ebene sein, die zumindest einen Aktuator aufweist. Als Aktuator kann beispielsweise jeweils einer der folgenden vorgesehen sein: ein Elektromotor, eine Pneumatik, eine Mechatronik, eine Pumpe, ein elektrisches Schloss, ein Verbrennungsmotor, um nur einige beispielhaft zu nennen. Um nun die Rechenebene mit den Fahrzeugfunktionen auch von der Aktuatorebene logisch zu trennen, ist folgendes bevorzugt vorgesehen.

Diese Steuerdaten überträgt die Integrationskomponente mittels der aktuatorspezifischen Ansteuerroutine an den jeweiligen Aktuator. In der Fahrzeugfunktion selbst muss also nicht implementiert sein, wie Steuerdaten für einen spezifischen Aktuator erzeugt werden. Es reicht, eine aktuator-unabhängige Aufrufroutine mit Kommandodaten durchzuführen. Die Kommandodaten können ebenfalls aktuatorunabhängig formuliert oder gebildet sein. Die Übersetzung in die aktuatorspezifischen Steuerdaten wird durch die Integrationskomponente durchgeführt. Somit ist auch die Aktuator-Ansteuerung getrennt von den Fahrzeugfunktionen. Es gibt eine Aufrufschnittstelle, an welcher alle Fahrzeugfunktionen mittels einer jeweiligen Aufrufroutine Kommandodaten an die Integrationskomponente übergeben können. Diese erzeugt aktuatorspezifisch die Steuerdaten, die dann über das besagte Datennetzwerk an jeweils einen Aktuator ausgesendet werden können.

Jede der Fahrzeugfunktionen muss sich somit nicht mit dem Erzeugen von aktuatorspezifischen Steuerdaten der Aktuatoreinrichtung auskennen oder befassen. Stattdessen ruft jede der Fahrzeugfunktionen eine Aufrufroutine der Integratioskomponente auf und übergibt dieser Kommandodaten, die angeben, was der jeweilige Aktuator tun oder ausführen soll. Damit ist die Fahrzeugfunktion hardwareunabhängig. Somit ergibt sich für die Fahrzeugfunktionen ein einheitliches Protokoll für die Aufrufroutine. Das Austauschen eines Aktuators erfordert es somit nicht, dass auch die Fahrzeugfunktion angepasst wird. Die aktuatorspezifischen Steuerdaten können dagegen Steuerbefehle enthalten, die nur von dem angesteuerten Akuator interpretiert werden können. Z.B. kann die Aufrufroutine ganz allgemein das Einstellen eines Lenkwinkels durch die Angabe von "Grad" vorsehen (z.B. "5° links"), während dann der zuständige Aktuator z.B. eine Angabe in einem herstellerspezifischen Format (z.B. "12 Ticks links") als Steuerdaten erwartet. Die Umrechnung erfolgt dann in der Integrationskomponente. Zudem steht jeder Aktuator über die Integrationskomponente mehreren Fahrzeugfunktionen bereit, sodass nicht jede Fahrzeugfunktion selbst zusammen mit einem eigenen Aktuator bereitgestellt werden muss.

Zu der Erfindung gehören auch optionale Weiterbildungen, durch die sich zusätzliche Vorteile ergeben.

Wie bereits beschrieben, wandelt die Integrationskomponente die Sensordaten in jeweilige Zustandsdaten um. Dies kann realisiert werden, indem eine Einheitenkonvertierung durchgeführt wird. So kann beispielsweise für einen Lenkwinkel zwischen Grad und einer Hersteller bedingten Angabe einer Sensoreinheit konvertiert werden. Zusätzlich oder alternativ dazu kann eine Skalierung durchgeführt werden. So kann ein Wertebereich der Sensordaten an einen von einer Fahrzeugfunktionen benötigten Wertebereich angepasst werden. Zusätzlich oder alternativ dazu können mehrere Sensorsignale die jeweils durch die Sensordaten repräsentiert sind, zu einem Umgebungssignal verknüpft werden, dessen Zustandsdaten dann von einer Fahrzeugfunktion abgerufen werden können. Hierdurch kann eine Vorverarbeitung durch die Integrationskomponente bereitgestellt werden. Das Umwandeln von Sensordaten in Zustandsdaten macht die Sensoreinheiten austauschbar, ohne dass die Interpretation der Zustandsdaten durch die Fahrzeugfunktionen notwendig ist.

Die beschriebenen Abrufroutinen, mittels welchen die Fahrzeugfunktionen Zustandsdaten bei der Integrationskomponente abrufen, sind insbesondere unabhängig von einem Hersteller und/oder Baumodell jeder Sensoreinheit. Somit kann also die Fahrzeugfunktion unabhängig von Hardwarebedingungen in Form der Sensoreinheiten und/oder unabhängig von Zuliefererbedingungen der Lieferer der Sensoreinheiten entwickelt werden. Die Anpassung einer Fahrzeugfunktion an die im Kraftfahrzeug vorhandene Sensoreinheit erfolgt durch die Integrationskomponente. Somit ist eine hardwareunabhängige Entwicklung oder Herstellung von Fahrzeugfunktionen möglich.

Die Fahrzeugfunktionen einerseits und jede Sensoreinheit andererseits sind bevorzugt derart ausgestaltet, dass sie unabhängig voneinander austauschbar sind. Das Ersetzen oder Austauschen einer Fahrzeugfunktion oder einer Sensoreinheit wird auf der jeweils anderen Seite durch die Integrationskomponente kompensiert oder kaschiert.

Die Integrationskomponente kann wie eine Fahrzeugfunktion als Teil der Recheneinrichtung ausgestaltet sein, z.B. als weiteres Programmmodul. Insbesondere ist vorgesehen, dass die Integrationskomponente von der Sensoreinrichtung getrennt bereitgestellt ist und die Erfassungsroutine, mittels welcher die Integrationskomponente Sensordaten an der zumindest einen Sensoreinheit der Sensoreinrichtung beschafft oder ermittelt, umfasst dann, dass die Integrationskomponente die Sensordaten über ein Datennetzwerk des Kraftfahrzeugs aus der Sensoreinrichtung empfängt. Das Datennetzwerk kann beispielsweise auf der Grundlage eines Ethernet-Netzwerks und/oder eines Datenbussystems, beispielsweise eines CAN-Bus (Controller Area Network), gebildet sein. Es muss also nicht jede Sensoreinheit ihre eigene Integrationskomponente bereitstellen, um seine Sensordaten im Kraftfahrzeug auszusenden oder nutzbar zu machen.

Das Umwandeln von Kommandodaten in jeweilige Steuerdaten kann zum Beispiel vorsehen, dass eine Einheitenkonvertierung durchgeführt wird und/oder eine Skalierung. Dies erlaubt es, die Fahrzeugfunktionen unabhängig von aktuatorspezifischen Definitionen der Steuerdaten zu implementieren oder zu entwickeln.

Bevorzugt ist aufgrund der Flexibilität beim Nachrüsten von Fahrzeugfunktionen vorgesehen, dass die Recheneinrichtung auf der Grundlage von Applikationsdaten (das heißt Programmdaten oder einem Programmmodul für eine weitere Fahrzeugfunktion) zumindest eine weitere Fahrzeugfunktion nachrüstet oder installiert und dann mit der Integrationskomponente koppelt. Somit kann also in dem Kraftfahrzeug eine Fahrzeugfunktion in der Recheneinrichtung nachgerüstet werden. Die Applikationsdaten können hierzu beispielsweise über die besagte Kommunikationseinrichtung empfangen werden.

Bisher wurde die Sensoreinrichtung als passive, lediglich die Sensoreinheiten aufweisende Sensor-Ebene oder Sensor-Aktuator-Ebene geschrieben, bei welcher alle Logik oder Verarbeitung in die Rechenebene verlagert ist. Dies ist aber nicht immer vorteilhaft. Bevorzugt ist deshalb vorgesehen, dass zumindest eine Sensoreinheit der Sensoreinrichtung eine jeweilige Eigenschutzfunktion betreibt und die jeweilige Eigenschutzfunktion selbstständig, unabhängig von der Integrationskomponente in Abhängigkeit von den Sensordaten der Sensoreinheit Steuerdaten erzeugt. So kann also auch innerhalb der Sensoreinrichtung beispielsweise ein Aktuator gesteuert werden oder eine Sensoreinheit abgeschaltet werden. Die Sensoreinrichtung ist somit nicht vollständig passiv. Beispielsweise kann eine Selbstabschaltung einer Sensoreinheit erfolgen, wenn diese außerhalb eines zulässigen Betriebsbereichs betrieben wird, beispielsweise überhitzt ist.

Um in einem Kraftfahrzeug das erfindungsgemäße Verfahren durchzuführen, ist die beschriebene Rechenebene nötig. Um diese bereitzustellen, ist durch die Erfindung auch eine Recheneinrichtung für ein Kraftfahrzeug bereitgestellt, wobei die Recheneinrichtung zumindest einen Prozessor (Mikroprozessor oder Mikrocontroller) zum Ausführen von Fahrzeugfunktionen aufweist. Die Recheneinrichtung weist erfindungsgemäß auch die beschriebene Integrationskomponente auf, die dazu eingerichtet ist, die Fahrzeugfunktionen mit einer Sensoreinrichtung des Kraftfahrzeugs zu koppeln und Sensordaten aus einer Sensoreinheit oder mehreren Sensoreinheiten der Sensoreinrichtung unabhängig von den Fahrzeugfunktionen mittels einer jeweiligen sensorspezifischen Erfassungsroutine zu beschaffen und daraus jeweilige Zustandsdaten zu erzeugen und jeder der Fahrzeugfunktionen in der beschriebenen Weise jeweils zum Abruf durch eine sensorunabhängige Abrufroutine bereitzustellen.

Das ebenfalls zur Erfindung gehörige Kraftfahrzeug weist die Sensoreinrichtung zum Erzeugen von Sensordaten auf sowie eine Ausführungsform der erfindungsgemäßen Recheneinrichtung, wobei die Sensoreinrichtung mit einer Integrationskomponente der Recheneinrichtung gekoppelt ist.

Bevorzugt ist vorgesehen, dass das Kraftfahrzeug auch eine Aktuatoreinrichtung mit zumindest einem Aktuator aufweist und diese Aktuatoreinrichtung ebenfalls mit der Integrationskomponente der Recheneinrichtung gekoppelt ist.

Zu der Erfindung gehören auch Weiterbildungen der erfindungsgemäßen Recheneinrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Recheneinrichtung und des erfindungsgemäßen Kraftfahrzeugs hier nicht noch einmal beschrieben.

Im Folgenden sind Ausführungsbeispiele der Erfindung beschrieben. Hierzu zeigt die einzige Figur (Fig.) eine schematische Darstellung einer Ausführungsform des erfindungsgemäßen Kraftfahrzeugs zusammen mit einer Offboard-Ebene.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebenen Ausführungsformen auch durch weitere der bereits beschriebenen Merkmale der Erfindung ergänzbar.

Die Figur zeigt schematisiert ein Kraftfahrzeug 10, bei dem es sich um einen Kraftwagen, insbesondere einen Personenkraftwagen oder Lastkraftwagen handeln kann. Zusätzlich ist eine fahrzeugfremde Offboard-Ebene 11 (OFFBOARD) dargestellt, die beispielsweise ein mobiles Endgerät 12 und/oder einen Internet-Server 13 und/oder Fremdfahrzeuge 14 umfassen kann. Diese repräsentieren jeweils ein fahrzeugfremdes Fremdgerät. Der fahrzeugeigene oder zum Kraftfahrzeug 10 gehörige Bereich ist hier als Onboard-Bereich ONBOARD bezeichnet.

In dem Kraftfahrzeug 10 kann dessen elektronische Architektur 15 in zwei Ebenen eingeteilt sein, nämlich eine Rechenebene 16 und eine Sensor/Aktuator-Ebene 17. Die Rechenebene 16 kann durch eine Recheneinrichtung 18 gebildet sein, die einen oder mehrere Prozessoren 19 umfassen kann. Auf der Sensor/Aktuator-Ebene 17 kann eine Sensoreinrichtung 20 und eine Aktuatoreinrichtung 21 bereitgestellt sein. Die Sendeeinrichtung 21 kann Sensoreinheiten 22 umfassen, beispielsweise einen Lenkwinkelsensor und/oder eine Sensorik einer Hochvoltbatterie und/oder einen Radar. Die Aktuatoreinrichtung 21 kann einen oder mehrere Aktuatoren 23 aufweisen, beispielsweise eine elektrisch verfahrbare oder bewegbare Tür und/oder einen Heckklappenmotor und/oder einen Fensterheber. Allgemein stellt die Sensor-Aktuator-Ebene 17 spezifische, Sensor/Aktuator-gebundene Funktionen bereit, wie beispielsweise eine elektronische Stabilitätskontrolle (ESC), eine Fensterhebersteuerung, eine Motorsteuerung für einen Antriebsmotor des Kraftfahrzeugs 10.

Die Sensor/Aktuator-Ebene 17 kann mit der Rechenebene 16 über ein Datennetzwerk 24 verbunden sein. Somit können Sensordaten 25 aus der Sensoreinrichtung 20 zur Recheneinrichtung 18 übertragen werden. Aus der Recheneinrichtung 18 können Steuerdaten 26 an die Aktuator Einrichtung 21 übertragen werden.

Die Recheneinrichtung 18 kann zum Betreiben zumindest einer Funktionskomponente 27 vorgesehen sein. Eine Funktionskomponente 27 kann beispielsweise ein Programmmodul oder eine Softwarekomponente sein. Durch Betreiben einer Funktionskomponente 27 wird jeweils zumindest eine Fahrzeugfunktion 28 durch die jeweilige Funktionskomponente 27 ausgeführt. Beispiele für solche Fahrzeugfunktionen sind automatisiertes Fahren, dass Bereitstellen eines Umfeldmodells zum Modellieren einer Umgebung des Kraftfahrzeugs 10 und/oder einer Innenraum-Szenerie des Kraftfahrzeugs 10 und ein Thermometermanagement. Allgemein stellen die Fahrzeugfunktionen 28 übergreifende, rechen- und/oder datenintensive Fahrzeugfunktionen dar, die keine direkte Realisierung an der Sensoreinrichtung 20 und/oder der Aktuatoreinrichtung 21 erfordert.

Die Funktionskomponenten 27 müssen dabei die Sensordaten 25 nicht direkt verarbeiten können müssen. Genauso müssen die Funktionskomponenten 27 nicht dazu ausgelegt sein, die Steuerdaten 26 zu erzeugen. Vielmehr sind die Sensor/Aktuator-Ebene 17 und die Rechenebene 16 über eine Integrationskomponente 29 gekoppelt, welche die Sensordaten 25 in Zustandsdaten 30 umwandeln kann. Die Steuerdaten 26 können durch die Integrationskomponente 29 aus Kommandodaten 31 erzeugt werden, die durch die Fahrzeugfunktionen 28 erzeugt werden können.

Die Fahrzeugfunktionen 28 müssen daher nur mit der Integrationskomponente 29 kommunizieren. Hierzu können Sie über eine jeweilige Abrufroutine 32 die Zustandsdaten 30 von einer Abrufschnittstelle der Integrationskomponente 29 abrufen. Die Kommandodaten 31 können die Fahrzeugfunktionen 28 an einer Aufrufschnittstelle 34 mittels einer jeweiligen Aufrufroutine 35 bei der Integrationskomponente 29 abgeben.

Die Integrationskomponente 29 kann die Sensordaten 25 mittels einer Erfassungsroutine 36 aus dem Datennetzwerk 24 empfangen. Beispielsweise kann die Erfassungsroutine 36 das Auslesen eines CAN-Busses vorsehen. Mittels einer Ansteuerroutine 37 kann die Integrationskomponente 29 die Steuerdaten 26 über das Datennetzwerk 24 bei den Aktuatoren 23 abgeben.

In Bezug auf die Offboard-Ebene 11 ist vorgesehen, dass deren Komponenten 12, 13, 14 als Datenlieferanten für Quellendaten 40 vorgesehen sein können. Diese können über eine Kommunikationseinrichtung 41 des Kraftfahrzeugs 10 über jeweilige Kommunikationsverbindungen 42 aus beispielsweise dem Endgerät 12 und/oder dem Server 13 und/oder einem Fremdfahrzeug 14 empfangen werden. Des Weiteren kann beispielsweise auf dem Server 13 ebenfalls eine ausgelagerte Funktionskomponente 27' betrieben werden, durch welche ausgelagerte Fahrzeugfunktionen 28' ausgeführt werden können. Diese können dann ebenfalls in dem Kraftfahrzeug 10 genutzt werden, beispielsweise für eine Routenplanung, Navigation und/oder als Quellendaten 40 können Ampelinformationen oder Kartendaten bereitgestellt werden. Des Weiteren können über die Kommunikationsverbindungen 32 auch Zustandsdaten 30 in der Offboard-Ebene 11 bereitgestellt werden.

Die Prozessoren 19, die Kommunikationseinrichtung 41 und das Datennetzwerk 24 können über eine Datenautobahn 23 verknüpft sein, d.h. ein Datenbussystem und/oder Datennetzwerksystem, wie beispielsweise ein PCI-Bus (PCI - Peripheral Component Interconnect).

Durch die Trennung der Fahrzeugfunktionen 28 von der Sensor/Aktuator-Ebene 17 und die Verwendung von sensorunabhängigen Abrufroutinen 32 sowie aktuatorunabhängigen Aufrufroutinen 35 kann eine Fahrzeugfunktion unabhängig von der Bauweise der Sensoreinheiten 22 und Aktuatoren 23 entwickelt werden. Die zugehörige Funktionskomponente 27, d.h. der Programmcode, kann in der Recheneinrichtung 28 flexibel nachgeladen werden, die Abstraktionen der Sensor/Aktuator-Ebene 17 von der Rechenebene 16 ist durch die Integrationskomponente 29 ermöglicht, die eine hardwareunabhängige Entwicklung der Funktionskomponenten 27 ermöglicht.

Die drei Ebenen 11, 16, 17 sind durch die durchgängigen Kommunikations- und Protokollmechanismen, basierend auf den Abrufroutinen und den Aufrufroutinen, durchgehend einheitlich verknüpft oder ausgestaltet.

Somit ergibt sich ein funktionsfähiges Gesamtkonzept zum Ausführen von hardwareunabhängigen Fahrzeugfunktionen 28, 28'.

Es können einheitliche Richtlinien zur Gliederung einzelner Fahrzeugfunktionen 28, 28' in Teilfunktionen vorgenommen werden, wobei die Zuordnung jeder Teilfunktion in eine der Ebenen 11, 16, 17 erfolgen kann. Hierdurch ergibt sich ein wesentlich besseres Systemverständnis und eine bessere Überschaubarkeit. Es ist ein einfaches Nachladen von Funktionskomponenten 27 und damit von Funktionalitäten in dem Kraftfahrzeug 10 ermöglicht. Bei einem auftretenden Fehler kann dieser systematisiert gesucht werden.

Bevorzugt erfolgt die folgende Aufteilung von den beschriebenen Teilfunktionen in der Architektur.

Für eine hardwarenahe Regelung und Datenverarbeitung ist die Sensor/Aktuator-Ebene 17 vorgesehen. Es können mechatronisch abhängige Funktionen wie das Ansteuern von Hardware, das Lesen/Bereitstellen von Sensorwerten und/oder ein Eigenschutz, wie eine Temperaturüberwachung und/oder das Unterbrechen eines elektrischen Stromes. Es kann auch eine aktuatornahe Regelung vorgesehen sein, wie die besagte ESC-Regelung. In der Sensor/Aktuator-Ebene 17 sind aber keine darüber hinausgehenden Funktionen, wie beispielsweise eine Geschwindigkeitsregelung für den Antriebsmotor enthalten. Somit ergibt sich zwar ein durch den Eigenschutz bereitgestelltes Smart-Sensor- und Smart-Aktor-Konzept. Indem aber die Sensoreinheiten 22 und die Aktuatoren 23 nicht mit den Fahrzeugfunktionen 28 direkt interagieren, können standardisierte Komponenten verwendet werden, die dann über die Integrationskomponente 29 für die Fahrzeugfunktionen 28 verfügbar gemacht werden.

Durch die Integrationskomponente 29 ergibt sich eine Domänenverwaltung, in dem die Sensoreinrichtung 20 und die Aktuatoreinrichtung 21 über die Integrationskomponente 29 für die Funktionskomponenten 27 verfügbar gemacht werden. Es ergibt sich also eine Eingabe/Ausgabe-Vorverarbeitung für die eigentlichen Fahrzeugfunktionen. Es können auch domänenspezifische Funktionen vorgesehen sein, wie das Lademanagement, einen schlüssellosen Zugang und Motorstart und/oder eine Lenkungsregelung. Allgemein ist in der Rechenebene 16 eine mechatronisch unabhängige Funktionalität umsetzbar.

Die Funktionskomponenten 27 können durch die Prozessoren 29 der Recheneinrichtung 18 mit hochperformanter Rechenleistung ausgeführt werden. Es steht somit leistungsfähige Hardware und Betriebssystem-Software zur Verfügung, um Fahrzeugfunktionen 28 auszuführen. Auch fahrzeugübergreifende rechen- und datenintensive Fahrzeugfunktionen, wie das autonome Fahren, dass Bereitstellen eines Umgebungsmodells und/oder das maschinelle Lernen können hier umgesetzt sein. Es ist keine Anpassung an eine Hardware-spezifische Eingabe/Ausgabe nötig.

Durch die Recheneinrichtung 18 ist also generisch Rechenleistung bereitgestellt, mittels welcher beliebige Fahrzeugfunktionen, die mechatronisch unabhängig sind, ausgeführt werden können.

Durch die Offboard-Ebene 11 können rechen- und datenintensive Fahrzeugfunktionen, wie die Schwarmdaten-Analyse zum Auswerten von Zustandsdaten mehrerer Kraftfahrzeuge ausgeführt werden. Es lassen sich auch für ein spezifisches Fahrzeug vorgesehene ausgelagerte Fahrzeugfunktionen 28' ausführen, wie die Navigation oder Spracherkennung. Es können auch Datenquellen für die Fahrzeugfunktionen 28, wie beispielsweise das Musikstreaming und/oder die Objekterkennung umliegender Objekte und/oder das Empfangen von Warnungen von anderen Kraftfahrzeugen und/oder Kartendaten an das Kraftfahrzeug 10 über die Kommunikationsverbindungen 42 angebunden werden.

Insgesamt zeigen die Beispiele, wie durch die Erfindung für ein Kraftfahrzeug ein Automotive-3-Ebenen-Architekturkonzept bereitgestellt werden kann.

## Patentansprüche

1. Verfahren zum Bereitstellen von Fahrzeugfunktionen (28) in einem Kraftfahrzeug (10), wobei in einer Recheneinrichtung (18) des Kraftfahrzeugs (10) die Fahrzeugfunktionen (28) auf der Grundlage von Sensordaten (25) einer Sensoreinrichtung (20) des Kraftfahrzeugs (10) bereitgestellt werden, wobei
in dem Kraftfahrzeug (10) die Fahrzeugfunktionen (28) mit der Sensoreinrichtung (20) über eine Integrationskomponente (29) der Recheneinrichtung (18) des Kraftfahrzeugs (10) gekoppelt sind und die Integrationskomponente (29) die Sensordaten (25) aus einer Sensoreinheit (22) oder mehreren Sensoreinheiten (22) der Sensoreinrichtung (20) unabhängig von den Fahrzeugfunktionen (28) mittels einer jeweiligen sensorspezifischen Erfassungsroutine (36) beschafft und daraus jeweilige Zustandsdaten (30) erzeugt und jede der Fahrzeugfunktionen (28) jeweils zumindest einige der bereitgestellten Zustandsdaten (30) mittels einer sensorunabhängigen Abrufroutine (32) aus der Integrationskomponente (29) abruft, indem die Integrationskomponente (29) die Zustandsdaten (30) an einer für alle Fahrzeugfunktionen (28) zugänglichen Abrufschnittstelle (33) bereitstellt und die bereitgestellten Zustandsdaten (30) durch die jeweilige Abrufroutine (32) an der Abrufschnittstelle (33) ausgewählt und abgerufen werden, wobei
die Integrationskomponente (29) mit einer Kommunikationseinrichtung (41) gekoppelt ist und die Kommunikationseinrichtung (41) eine jeweilige Kommunikationsverbindung (42) mit zumindest einem fahrzeugfremden Fremdgerät (12, 13, 14) als jeweiliger Komponente einer Offboard-Ebene (11) betreibt, wobei das jeweilige fahrzeugfremde Fremdgerät (12, 13, 14) ein in dem Kraftfahrzeug befindliches mobiles Endgerät oder ein Server des Internets oder ein anderes Kraftfahrzeug ist, und die Integrationskomponente (29) über die Kommunikationseinrichtung (41) Quellendaten (40) empfängt, wobei die Komponenten der Offboard-Ebene (11) als Datenlieferanten für die Quellendaten (40) vorgesehen sind, und die Integrationskomponente (29) daraus weitere Zustandsdaten (30) für die im Kraftfahrzeug (10) bereitgestellten Fahrzeugfunktionen (28) erzeugt, wobei die Fahrzeugfunktionen (28) mittels zumindest einer Abrufroutine (32) auch diese zusätzlichen Zustandsdaten abrufen,
**dadurch gekennzeichnet, dass**
zumindest eine Fahrzeugfunktion (28) über eine Direktverbindung unter Umgehung der Integrationskomponente (29) mit zumindest einer Sensoreinheit (22) der Sensoreinrichtung (20) gekoppelt ist und aus der Sensoreinheit (22) deren Sensordaten (25) mit einer Datenrate empfängt, die größer als eine von der Integrationskomponente (29) zum Abrufen der Zustandsdaten (30) bereitgestellte Datenrate ist, und wobei die Fahrzeugfunktionen (28) und eine Aktuatoreinrichtung (21) des Kraftfahrzeugs (10) über die Integrationskomponente (29) gekoppelt sind und zumindest eine der Fahrzeugfunktionen (28) jeweils in Abhängigkeit von den durch die Fahrzeugfunktion (28) abgerufenen Zustandsdaten (30) Kommandodaten (31) zum Steuern zumindest eines Aktuators (23) der Aktuatoreinrichtung (21) erzeugt und die Fahrzeugfunktion (28) die Kommandodaten (31) mittels einer aktuatorunabhängigen Aufrufroutine (35) an die Integrationskomponente (29) ausgibt und die Integrationskomponente (29) die Kommandodaten (31) in jeweilige aktuatorspezifische Steuerdaten (26) umwandelt und die Steuerdaten (26) mittels einer aktuatorspezifischen Ansteuerroutine (37) an den jeweiligen Aktuator (23) überträgt.

2. Verfahren nach Anspruch 1, wobei die Integrationskomponente (29) in die jeweiligen Zustandsdaten (30) aus den Sensordaten (25) erzeugt, indem eine Einheitenkonvertierung und/oder Skalierung und/oder eine Verknüpfung mehrerer Sensorsignale zu einem Umgebungssignal durchgeführt wird.

3. Verfahren nach einem der vorhergehenden Ansprüche, wobei jede Abrufroutine (32) unabhängig von einem Hersteller und/oder Baumodell jeder Sensoreinheit (22) ist.

4. Verfahren nach einem der vorhergehenden Ansprüche, wobei die Fahrzeugfunktionen (28) einerseits und jede Sensoreinheit (20) andererseits unabhängig voneinander austauschbar ausgestaltet sind.

5. Verfahren nach einem der vorhergehenden Ansprüche, wobei die Integrationskomponente (29) von der Sensoreinrichtung (20) getrennt bereitgestellt ist und die Erfassungsroutine (36) umfasst, dass die Integrationskomponente (29) die Sensordaten (25) über ein Datennetzwerk (24) des Kraftfahrzeugs (10) aus der Sensoreinrichtung (20) empfängt.

6. Verfahren nach einem der vorhergehenden Ansprüche, wobei die Integrationskomponente (29) die Kommandodaten (31) in die jeweiligen Steuerdaten (26) umwandelt, indem eine Einheitenkonvertierung und/oder Skalierung durchgeführt wird.

7. Verfahren nach einem der vorhergehenden Ansprüche, wobei die Integrationskomponente (29) zumindest einige ihrer Zustandsdaten (30) an zumindest eine in einem jeweiligen Fremdgerät (13) fahrzeugextern ausgeführte, ausgelagerte Fahrzeugfunktion (28') über die Kommunikationseinrichtung (41) aussendet.

8. Verfahren nach einem der vorhergehenden Ansprüche, wobei die Recheneinrichtung (18) auf der Grundlage von Applikationsdaten zumindest eine weitere Fahrzeugfunktion nachrüstet und mit der Integrationskomponente (29) koppelt.

9. Verfahren nach einem der vorhergehenden Ansprüche, wobei zumindest eine Sensoreinheit (22) der Sensoreinrichtung (20) eine jeweilige Eigenschutzfunktion betreibt und die jeweilige Eigenschutzfunktion selbständig, unabhängig von der Integrationskomponente (29) in Abhängigkeit von den Sensordaten (25) der Sensoreinheit (20) Steuerdaten erzeugt.

10. Recheneinrichtung (18) für ein Kraftfahrzeug (10), wobei die Recheneinrichtung (18) zumindest einen Prozessor (19) zum Ausführen von Fahrzeugfunktionen (28) aufweist, wobei
die Recheneinrichtung (18) eine Integrationskomponente (29) aufweist, die dazu eingerichtet ist, die Fahrzeugfunktionen (28) mit einer Sensoreinrichtung (20) des Kraftfahrzeugs (10) zu koppeln und Sensordaten (25) aus einer Sensoreinheit (22) oder mehreren Sensoreinheiten (22) der Sensoreinrichtung (20) unabhängig von den Fahrzeugfunktionen (28) mittels einer jeweiligen sensorspezifischen Erfassungsroutine (36) zu beschaffen und zu jeweiligen Zustandsdaten (30) umzuwandeln und jeder der Fahrzeugfunktionen (28) jeweils zum Abruf durch eine sensorunabhängige Abrufroutine (32) bereitzustellen, wobei
die Integrationskomponente (29) mit einer Kommunikationseinrichtung (41) gekoppelt ist und die Kommunikationseinrichtung (41) eine jeweilige Kommunikationsverbindung (42) mit zumindest einem fahrzeugfremden Fremdgerät (12, 13, 14) als jeweiliger Komponente einer Offboard-Ebene (11) betreibt, wobei das jeweilige fahrzeugfremde Fremdgerät (12, 13, 14) in dem Kraftfahrzeug befindliches mobiles Endgerät oder ein Server des Internets oder ein anderes Kraftfahrzeug ist, und die Integrationskomponente (29) über die Kommunikationseinrichtung (41) Quellendaten (40) empfängt, wobei die Komponenten der Offboard-Ebene (11) als Datenlieferanten für die Quellendaten (40) vorgesehen sind, und die Integrationskomponente (29) daraus weitere Zustandsdaten (30) für die im Kraftfahrzeug (10) bereitgestellten Fahrzeugfunktionen (28) erzeugt, wobei die Fahrzeugfunktionen (28) mittels zumindest einer Abrufroutine (32) auch diese zusätzlichen Zustandsdaten abrufen, indem die Integrationskomponente (29) die Zustandsdaten (30) an einer für alle Fahrzeugfunktionen (28) zugänglichen Abrufschnittstelle (33) bereitstellt und die bereitgestellten Zustandsdaten (30) durch die jeweilige Abrufroutine (32) an der Abrufschnittstelle (33) auswählbar und abrufbar sind,
**dadurch gekennzeichnet, dass**
zumindest eine Fahrzeugfunktion (28) über eine Direktverbindung unter Umgehung der Integrationskomponente (29) mit zumindest einer Sensoreinheit (22) der Sensoreinrichtung (20) gekoppelt ist und aus der Sensoreinheit (22) deren Sensordaten (25) mit einer Datenrate empfängt, die größer als eine von der Integrationskomponente (29) zum Abrufen der Zustandsdaten (30) bereitgestellte Datenrate ist, und wobei die Fahrzeugfunktionen (28) und eine Aktuatoreinrichtung (21) des Kraftfahrzeugs (10) über die Integrationskomponente (29) gekoppelt sind und zumindest eine der Fahrzeugfunktionen (28) jeweils in Abhängigkeit von den durch die Fahrzeugfunktion (28) abgerufenen Zustandsdaten (30) Kommandodaten (31) zum Steuern zumindest eines Aktuators (23) der Aktuatoreinrichtung (21) erzeugt und die Fahrzeugfunktion (28) die Kommandodaten (31) mittels einer aktuatorunabhängigen Aufrufroutine (35) an die Integrationskomponente (29) ausgibt und die Integrationskomponente (29) die Kommandodaten (31) in jeweilige aktuatorspezifische Steuerdaten (26) umwandelt und die Steuerdaten (26) mittels einer aktuatorspezifischen Ansteuerroutine (37) an den jeweiligen Aktuator (23) überträgt.

11. Kraftfahrzeug (10) mit einer Sensoreinrichtung (20) zum Erzeugen von Sensordaten (25),
**dadurch gekennzeichnet, dass**
das Kraftfahrzeug (10) eine Recheneinrichtung (18) nach Anspruch 10 aufweist, wobei die Sensoreinrichtung (20) mit einer Integrationskomponente (29) der Recheneinrichtung (18) gekoppelt ist.

12. Kraftfahrzeug (10) nach Anspruch 11, wobei eine Aktuatoreinrichtung (21) mit zumindest ein Aktuator (23) bereitgestellt ist und die Aktuatoreinrichtung (21) mit der Integrationskomponente (29) der Recheneinrichtung (18) gekoppelt ist.

## Claims

1. Method for providing vehicle functions (28) in a motor vehicle (10), wherein the vehicle functions (28) are provided in a calculation device (18) of the motor vehicle (10) on the basis of sensor data (25) from a sensor device (20) of the motor vehicle (10), wherein
in the motor vehicle (10), the vehicle functions (28) are coupled to the sensor device (20) via an integration component (29) of the calculation device (18) of the motor vehicle (10), and the integration component (29) procures the sensor data (25) from a sensor unit (22) or from several sensor units (22) of the sensor device (20) independently of the vehicle functions (28) by means of a respective sensor-specific acquisition routine (36) and from said data generates the respective status data (30), and each of the vehicle functions (28) respectively retrieves at least some of the provided status data (30) from the integration component (29) by means of a sensor-independent retrieval routine (32), in that the integration component (29) provides the status data (30) at a retrieval interface (33) accessible to all vehicle functions (28), and the provided status data (30) are selected and retrieved by the respective retrieval routine (32) at the retrieval interface (33), wherein
the integration component (29) is coupled to a communication device (41), and the communication device (41) operates a respective communication connection (42) to at least one external device (12, 13, 14) external to the vehicle as a respective component of an offboard level (11), wherein the respective external device (12, 13, 14) external to the vehicle is a mobile terminal present in the motor vehicle or an internet server or another motor vehicle, and the integration component (29) receives source data (40) via the communication device (41), wherein the components of the offboard level (11) are provided as data suppliers for the source data (40), and the integration component (29) produces from said data further status data (30) for the vehicle functions (28) provided in the motor vehicle (10), wherein the vehicle functions (28) also retrieve these additional status data by means of at least one retrieval routine (32),
**characterised in that**
at least one vehicle function (28) is coupled to at least one sensor unit (22) of the sensor device (20) via a direct connection bypassing the integration component (29), and receives from the sensor unit (22) its sensor data (25) with a data rate which is greater than a data rate provided by the integration component (29) for retrieval of the status data (30), and wherein
the vehicle functions (28) and an actuator device (21) of the motor vehicle (10) are coupled via the integration component (29), and at least one of the vehicle functions (28) generates, depending on the respective status data (30) retrieved by the vehicle function (28), command data (31) for controlling at least one actuator (23) of the actuator device (21), and the vehicle function (28) emits the command data (31) to the integration component (29) by means of an actuator-independent calling routine (35), and the integration component (29) converts the command data (31) into respective actuator-specific control data (26) and transmits the control data (26) to the respective actuator (23) by means of an actuator-specific activation routine (37).

2. Method according to claim 1, wherein the integration component (29) generates the respective status data (30) from the sensor data (25) by performance of a unit conversion and/or scaling and/or linking of several sensor signals into an environmental signal.

3. Method according to any of the preceding claims, wherein each retrieval routine (32) is independent of a manufacturer and/or model of each sensor unit (22).

4. Method according to any of the preceding claims, wherein the vehicle functions (28) firstly and each sensor unit (20) secondly are configured so as to be exchangeable independently of each other.

5. Method according to any of the preceding claims, wherein the integration component (29) is provided separately from the sensor device (20), and the acquisition routine (36) includes that the integration component (29) receives the sensor data (25) from the sensor device (20) via a data network (24) of the motor vehicle (10).

6. Method according to any of the preceding claims, wherein the integration component (29) converts the command data (31) into the respective control data (26) by performance of a unit conversion and/or scaling.

7. Method according to any of the preceding claims, wherein the integration component (29) emits at least some of its status data (30) via the communication device (41) to at least one vehicle function (28') which is located in a respective external device (13) designed external to the vehicle.

8. Method according to any of the preceding claims, wherein the calculation device (18) adds at least one further vehicle function on the basis of application data and couples this to the integration component (29).

9. Method according to any of the preceding claims, wherein at least one sensor unit (22) of the sensor device (20) operates a respective self-protection function, and the respective self-protection function produces control data independently of the integration component (29), depending on the sensor data (25) of the sensor unit (20).

10. Calculation device (18) for a motor vehicle (10), wherein the calculation device (18) comprises at least one processor (19) for performing vehicle functions (28), wherein
the calculation device (18) comprises an integration component (29) which is configured to couple the vehicle functions (28) to a sensor device (20) of the motor vehicle (10), and to procure the sensor data (25) from a sensor unit (22) or from several sensor units (22) of the sensor device (20) independently of the vehicle functions (28) by means of a respective sensor-specific acquisition routine (36) and to convert this into respective status data (30) and provide said data to each of the vehicle functions (28) for retrieval by a sensor-independent retrieval routine (32), wherein
the integration component (29) is coupled to a communication device (41), and the communication device (41) operates a respective communication connection (42) to at least one external device (12, 13, 14) external to the vehicle as a respective component of an offboard level (11), wherein the respective external device (12, 13, 14) external to the vehicle is a mobile terminal present in the motor vehicle or an internet server or another motor vehicle, and the integration component (29) receives source data (40) via the communication device (41), wherein the components of the offboard level (11) are provided as data suppliers for the source data (40), and the integration component (29) produces from said data further status data (30) for the vehicle functions (28) provided in the motor vehicle (10), wherein the vehicle functions (28) also retrieve these additional status data by means of at least one retrieval routine (32), in that the integration component (29) provides the status data (30) at a retrieval interface (33) accessible to all vehicle functions (28), and the provided status data (30) can be selected and retrieved by the respective retrieval routine (32) at the retrieval interface (33),
**characterised in that**
at least one vehicle function (28) is coupled to at least one sensor unit (22) of the sensor device (20) via a direct connection bypassing the integration component (29), and receives from the sensor unit (22) its sensor data (25) with a data rate which is greater than a data rate provided by the integration component (29) for retrieval of the status data (30), and wherein
the vehicle functions (28) and an actuator device (21) of the motor vehicle (10) are coupled via the integration component (29), and at least one of the vehicle functions (28) generates, depending on the respective status data (30) retrieved by the vehicle function (28), command data (31) for controlling at least one actuator (23) of the actuator device (21), and the vehicle function (28) emits the command data (31) to the integration component (29) by means of an actuator-independent calling routine (35), and the integration component (29) converts the command data (31) into respective actuator-specific control data (26) and transmits the control data (26) to the respective actuator (23) by means of an actuator-specific activation routine (37).

11. Motor vehicle (10) with a sensor device (20) for generating sensor data (25),
**characterised in that**
the motor vehicle (10) comprises a calculation device (18) according to claim 10, wherein the sensor device (20) is coupled to an integration component (29) of the calculation device (18).

12. Motor vehicle (10) according to claim 11, wherein an actuator device (21) with at least one actuator (23) is provided, and the actuator device (21) is coupled to the integration component (29) of the calculation device (18).

## Revendications

1. Procédé de mise à disposition de fonctions de véhicule (28) dans un véhicule automobile (10), dans lequel dans un dispositif de calcul (18) du véhicule automobile (10) les fonctions de véhicule (28) sont mises à disposition sur la base de données de capteur (25) d'un dispositif de capteur (20) du véhicule automobile (10), dans lequel
dans le véhicule automobile (10) les fonctions de véhicule (28) sont couplées au dispositif de capteur (20) par le biais d'un composant d'intégration (29) du dispositif de calcul (18) du véhicule automobile (10) et le composant d'intégration (29) obtient les données de capteur (25) d'une unité de capteur (22) ou de plusieurs unités de capteur (22) du dispositif de capteur (20) indépendamment des fonctions de véhicule (28) au moyen d'une routine de détection (36) respective spécifique au capteur et génère à partir de celles-ci des données d'état respectives (30) et chacune des fonctions de véhicule (28) appelle respectivement au moins quelques-unes des données d'état (30) mises à disposition au moyen d'une routine d'appel (32) indépendante du capteur du composant d'intégration (29) en ce que le composant d'intégration (29) met à disposition les données d'état (30) d'une interface d'appel (33) accessible à toutes les fonctions de véhicule (28) et les données d'état mises à disposition (30) sont sélectionnées et appelées par la routine d'appel (32) respective à l'interface d'appel (33), dans lequel
le composant d'intégration (29) est couplé à un dispositif de communication (41) et le dispositif de communication (41) utilise une liaison de communication (42) respective avec au moins un appareil externe (12, 13, 14) externe au véhicule comme composant respectif d'un plan externe (11), dans lequel l'appareil externe (12, 13, 14) externe au véhicule respectif est un appareil terminal mobile se trouvant dans le véhicule automobile ou un serveur de l'Internet ou un autre véhicule automobile, et le composant d'intégration (29) reçoit par le biais du dispositif de communication (41) des données source (40), dans lequel les composants du plan externe sont prévus comme fournisseurs de données pour les données source (40), et le composant d'intégration (29) génère à partir de celles-ci d'autres données d'état (30) pour les fonctions de véhicule (28) mises à disposition dans le véhicule automobile (10), dans lequel les fonctions de véhicule (28) appellent au moyen d'au moins une routine d'appel (32) aussi ces données d'état supplémentaires,
**caractérisé en ce que**
au moins une fonction de véhicule (28) est couplée par le biais d'une liaison directe en contournant le composant d'intégration (29) à au moins une unité de capteur (22) du dispositif de capteur (20) et à partir de l'unité de capteur (22) reçoit ses données de capteur (25) avec un taux de données qui est supérieur à un taux de données mis à disposition par le composant d'intégration (29) pour appeler des données d'état (30) et dans lequel
les fonctions de véhicule (28) et un dispositif actionneur (21) du véhicule automobile (10) sont couplés par le biais du composant d'intégration (29) et au moins une des fonctions de véhicule (28) génère respectivement en fonction des données d'état (30) appelées par la fonction de véhicule (28) des données d'ordre (31) pour la commande au moins d'un actionneur (23) du dispositif actionneur (21) et la fonction de véhicule (28) émet les données d'ordre (31) au moyen d'une routine d'appel (35) indépendante de l'actionneur au composant d'intégration (29) et le composant d'intégration (29) convertit les données d'ordre (31) en données de commande (26) respectives spécifiques à l'actionneur et transmet les données de commande (26) au moyen d'une routine de commande (37) spécifique à l'actionneur à l'actionneur respectif (23).

2. Procédé selon la revendication 1, dans lequel le composant d'intégration (29) génère les données d'état (30) respectives à partir des données de capteur (25) en ce qu'une conversion d'unités et/ou une mise à l'échelle et/ou une liaison de plusieurs signaux de capteur en un signal environnant est réalisée.

3. Procédé selon l'une des revendications précédentes, dans lequel chaque routine d'appel (32) est indépendante d'un fabriquant et/ou modèle de construction de chaque unité de capteur (22).

4. Procédé selon l'une des revendications précédentes, dans lequel les fonctions de véhicule (28) d'une part et chaque unité de capteur (20) d'autre part sont configurées de manière interchangeable indépendamment l'une de l'autre.

5. Procédé selon l'une des revendications précédentes, dans lequel le composant d'intégration (29) est mis à disposition séparément du dispositif de capteur (20) et comporte la routine de détection (36), que le composant d'intégration (29) reçoit les données de capteur (25) par le biais d'un réseau de données (24) du véhicule automobile (10) du dispositif de capteur (20).

6. Procédé selon l'une des revendications précédentes, dans lequel le composant d'intégration (29) convertit les données d'ordre (31) en les données de commande (26) respectives, en ce qu'une conversion d'unités et/ou mise à l'échelle est réalisée.

7. Procédé selon l'une des revendications précédentes, dans lequel le composant d'intégration (29) transmet au moins quelques-unes de ses données d'état (30) à au moins une fonction de véhicule (28') délocalisée, réalisée à l'extérieur du véhicule dans un appareil externe (13) respectif par le biais du dispositif de communication (41).

8. Procédé selon l'une des revendications précédentes, dans lequel le dispositif de calcul (18) rééquipe sur la base de données d'application au moins une autre fonction de véhicule et se couple au composant d'intégration (29).

9. Procédé selon l'une des revendications précédentes, dans lequel au moins une unité de capteur (22) du dispositif de capteur (20) utilise une fonction de propre protection respective et la fonction de propre protection respective génère des données de commande automatiquement, indépendamment du composant d'intégration (29) en fonction des données de capteur (25) de l'unité de capteur (20).

10. Dispositif de calcul (18) pour un véhicule automobile (10), dans lequel le dispositif de calcul (18) présente au moins un processeur (19) pour la réalisation de fonctions de véhicule (28), dans lequel
le dispositif de calcul (18) présente un composant d'intégration (29) qui est aménagé afin de coupler les fonctions de véhicule (28) à un dispositif de capteur (20) du véhicule automobile (10) et d'obtenir des données de capteur (25) d'une unité de capteur (22) ou de plusieurs unités de capteur (22) du dispositif de capteur (20) indépendamment des fonctions de véhicule (28) au moyen d'une routine de détection (36) respective spécifique au capteur et de les convertir en données d'état (30) respectives et de mettre à disposition chacune des fonctions de véhicule (28) respectivement pour l'appel par une routine d'appel (32) indépendante du capteur, dans lequel
le composant d'intégration (29) est couplé à un dispositif de communication (41) et le dispositif de communication (41) réalise une liaison de communication (42) respective avec au moins un appareil externe (12, 13, 14) externe au véhicule comme composant respectif d'un plan externe (11), dans lequel l'appareil externe (12, 13, 14) externe au véhicule respectif est un appareil terminal mobile se trouvant dans le véhicule automobile ou un serveur de l'Internet ou un autre véhicule automobile, et le composant d'intégration (29) reçoit par le dispositif de communication (41) des données source (40), dans lequel les composants du plan externe (11) sont prévus comme fournisseur de données pour les données source (40), et le composant d'intégration (29) génère à partir de celles-ci d'autres données d'état (30) pour les fonctions de véhicule (28) mises à disposition dans le véhicule automobile (10), dans lequel les fonctions de véhicule (28) appellent au moyen d'au moins une routine d'appel (32) aussi ces données d'état supplémentaires en ce que le composant d'intégration (29) met à disposition les données d'état (30) d'une interface d'appel (33) accessible à toutes les fonctions de véhicule (28) et les données d'état (30) mises à disposition peuvent être choisies et appelées par la routine d'appel (32) respective sur l'interface d'appel (33),
**caractérisé en ce que**
au moins une fonction de véhicule (28) est couplée par le biais d'une liaison directe en contournant le composant d'intégration (29) à au moins une unité de capteur (22) du dispositif de capteur (20) et à partir de l'unité de capteur (22) reçoit ses données de capteur (25) à un taux de données qui est supérieur à un taux de données mis à disposition par le composant d'intégration (29) pour appeler les données d'état (30), et dans lequel
les fonctions d'état (28) et un dispositif actionneur (21) du véhicule automobile (10) sont couplés par le biais du composant d'intégration (29) et au moins une des fonctions de véhicule (28) génère respectivement en fonction des données d'état (30) appelées par la fonction du véhicule (28) des données d'ordre (31) pour la commande au moins d'un actionneur (23) du dispositif actionneur (21) et la fonction de véhicule (28) émet les données d'ordre (31) au moyen d'une routine d'appel (35) indépendante de l'actionneur au composant d'intégration (29) et le composant d'intégration (29) convertit les données d'ordre (31) en données de commande (26) respectives spécifiques à l'actionneur et transmet les donnes de commande (26) au moyen d'une routine de commande (37) spécifique à l'actionneur à l'actionneur (23) respectif.

11. Véhicule automobile (10) avec un dispositif de capteur (20) pour la génération de données de capteur (25),
**caractérisé en ce que**
le véhicule automobile (10) présente un dispositif de calcul (18) selon la revendication 10, dans lequel le dispositif de capteur (20) est couplé à un composant d'intégration (29) du dispositif de calcul (18).

12. Véhicule automobile (10) selon la revendication 11, dans lequel un dispositif actionneur (21) est mis à disposition avec au moins un actionneur (23) et le dispositif actionneur (21) est couplé au composant d'intégration (29) du dispositif de calcul (18).
